# EUROPEAN PATENT APPLICATION

(11) **EP 4 703 120 A2**
(43) Date of publication of application: **04.03.2026**
(21) Application number: 25198299.7
(22) Date of filing: 27.08.2025
(51) Int. Cl.: B29C 45/17, B29C 44/42

(54) **INJECTION MOLDING SYSTEM AND METHOD FOR CLEANING FLUID SUPPLY UNIT**

(30) Priority: 03.09.2024 US 202463689862 P; 14.05.2025 US 202519208537
(71) Applicant: King Steel Machinery Co., Ltd., Taichung City 407 (TW)
(72) Inventor: CHEN, Ching-Hao, 407 Taichung City (TW); YEH, Liang-Hui, 402 Taichung City (TW)
(74) Representative: Michalski Hüttermann & Partner Patentanwälte mbB

(57) **Abstract**

An injection molding system (100a) is provided. A mixing unit (103) is configured to mix a flowable polymeric material with a blowing agent to form a mixture. A fluid supply unit (102) is configured to provide the blowing agent to the mixing unit (103). The fluid supply unit (102) includes an injection outlet coupled to the mixing unit, a compressor (108) configured to generate the blowing agent, an injection valve (110) disposed between the injection outlet and the compressor and configured to receive the blowing agent from the compressor through a first passage (118), and a cleaning mechanism (200) configured to clean the injection valve. The cleaning mechanism includes a control valve (111) coupled to the compressor through a second passage (119) and coupled to the injection valve (110) through a third passage (113) connected to the first passage, and an actuating device configured to actuate the control valve. The blowing agent is flowable to the injection valve through the control valve.

## Description

### CROSS-REFERENCE TO RELATED APPLICATION

The present application claims priority to U.S. Provisional Patent Application No. 63/689,862, filed on September 03, 2024, and U.S. Patent Application No. 19/208,537, filed on May 14, 2025, the entirety of which are incorporated by reference herein.

### TECHNICAL FIELD

The present disclosure is related to an injection molding system and an injection molding method, and, in particular, to a cleaning mechanism for a fluid supply unit of an injection molding system and an injection molding method for performing a cleaning procedure in the fluid supply unit.

### BACKGROUND

Foamed polymeric material has many advantages, such as high strength, low weight, impact resistance, thermal insulation, and others. Foamed articles can be made by injection molding or extrusion molding. For example, in an injection molding system, after the polymeric material is melted and mixed with a blowing agent to form a mixture, a force or pressure is applied to the mixture to inject or extrude the mixture into a cavity of a mold, and the mixture is foamed and cooled in the cavity to form the foamed article.

However, during the formation of article, residues may accumulate within the injection molding system. The presence of these residues can adversely affect product quality, lead to defects, and increase maintenance requirements and downtime. Therefore, it is necessary to improve the injection molding system and its operation method to facilitate the cleaning of residues.

### BRIEF SUMMARY OF THE DISCLOSURE

The present disclosure discloses an injection molding system and an injection molding method.

According to one embodiment of the present disclosure, an injection molding system is provided. The injection molding system includes a mixing unit and a fluid supply unit. The mixing unit is configured to mix a flowable polymeric material with a blowing agent to form a mixture. The fluid supply unit is configured to provide the blowing agent to the mixing unit. The fluid supply unit includes an injection outlet coupled to the mixing unit, a compressor configured to generate the blowing agent, an injection valve disposed between the injection outlet and the compressor and configured to receive the blowing agent from the compressor through a first passage, and a cleaning mechanism configured to clean the injection valve. The cleaning mechanism includes a control valve coupled to the compressor through a second passage, and coupled to the injection valve through a third passage connected to the first passage, and an actuating device configured to actuate the control valve. The blowing agent is flowable to the injection valve through the second passage, the third passage and the control valve.

According to one embodiment of the present disclosure, an injection molding method is provided. The injection molding method includes: providing a blowing agent from a compressor of a fluid supply unit to a mixing unit through an injection valve of the fluid supply unit through a first passage of the fluid supply unit; mixing a flowable polymeric material with the blowing agent to form a mixture in the mixing unit coupled to the fluid supply unit; and cleaning the injection valve by a cleaning mechanism of the fluid supply unit during or after the formation of the mixture. The cleaning the injection valve by the cleaning mechanism further includes: actuating a control valve of the cleaning mechanism connected to the compressor by a second passage and connected to the first passage by a third passage; and providing the blowing agent from the compressor to the injection valve through the second passage, the control valve and the third passage.

### BRIEF DESCRIPTION OF THE DRAWINGS

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.
FIG. 1 is an injection molding system, in accordance with some embodiments of the present disclosure.
FIG. 2 is an injection molding system, in accordance with some embodiments of the present disclosure.
FIG. 3 is the fluid supply unit of the injection molding system in FIGS. 1 and 2, in accordance with some embodiments of the present disclosure.
FIG. 4 is a method 400 of operating an injection molding system, in accordance with some embodiments of the present disclosure.
FIG. 5 is a method of performing a cleaning procedure to clean the injection valve of FIG. 3, in accordance with some embodiments of the present disclosure.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above" "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. Other than in the operating/working examples, or unless otherwise expressly specified, all of the numerical ranges, amounts, values and percentages, such as those for quantities of materials, durations of times, temperatures, operating conditions, ratios of amounts, and the likes thereof disclosed herein, should be understood as modified in all instances by the term "about." Accordingly, unless indicated to the contrary, the numerical parameters set forth in the present disclosure and the attached claims are approximations that can vary as desired. At the very least, each numerical parameter should be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

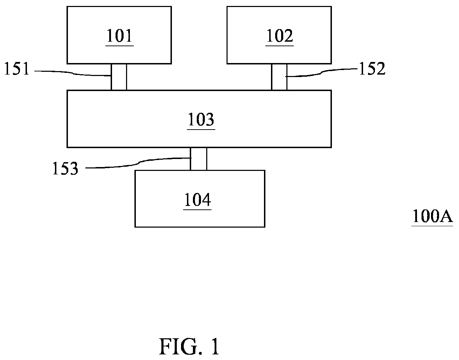

FIG. 1 is an injection molding system 100A, in accordance with some embodiments of the present disclosure. The injection molding system 100A includes a melting unit 101, a fluid supply unit 102, a mixing unit 103 and an injection unit 104. The melting unit 101 is coupled to the mixing unit 103 through at least one delivery channel 151. In some embodiments, the melting unit 101 is configured to receive raw polymeric material, heat and melt the raw polymeric material to become a flowable polymeric material (i.e., in a molten state), and discharge the flowable polymeric material. The flowable polymeric material is then delivered to the mixing unit 103 through the delivery channel 151. In some embodiments, the flowable polymeric material includes ethylene vinyl acetate (EVA), styrene-ethylene-butylene-styrene (SEBS), thermoplastic polyurethanes (TPU), thermoplastic polyester elastomer (TPEE) or the like.

The fluid supply unit 102 is coupled to the mixing unit 103 through at least one delivery channel 152. In some embodiments, the fluid supply unit 102 is configured to provide a fluid for the mixing unit 103. In some embodiments, the fluid supply unit 102 is configured to convert an inert gas (e.g. carbon dioxide or nitrogen) into supercritical state, and supply the fluid in supercritical state to the mixing unit 103. In some embodiments, the fluid supplied by the fluid supply unit 102 is a chemical or physical blowing agent. The blowing agent is then delivered to the mixing unit 103 through the delivery channel 152.

The mixing unit 103 is configured to mix the flowable polymeric material from the melting unit 101 with the fluid (e.g. blowing agent in supercritical state) from the fluid supply unit 102 to form a mixture. In some embodiments, the mixing unit 103 includes a mixing chamber and a mixing screw inside the mixing chamber. The flowable polymeric material and the fluid are delivered to the mixing chamber, and then the flowable polymeric material and the fluid are mixed by the mixing screw to form the mixture in the mixing chamber. In some embodiments, the mixing screw is configured to rotate in order to mix (or blend) the flowable polymeric material and the fluid, thereby forming the mixture.

The mixing unit 103 is coupled to the injection unit 104 through at least one delivery channel 153. In some embodiments, the mixing screw of the mixing unit 103 is configured to rotate in order to convey the mixture to the injection unit 104 through the delivery channel 153. The injection unit 104 is configured to receive the mixture from the mixing unit 103 and discharge the mixture out of the injection unit 104. In some embodiments, the injection unit 104 includes at least one injector to inject the mixture out of the injection unit 104.

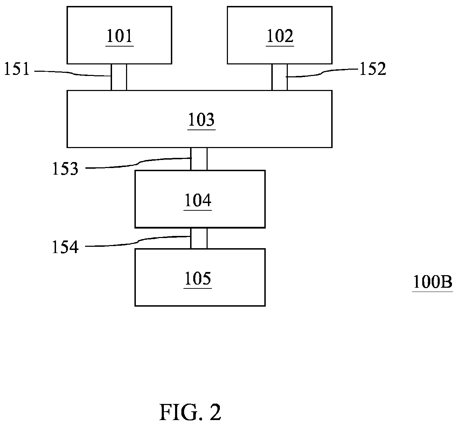

FIG. 2 is an injection molding system 100B, in accordance with some embodiments of the present disclosure. Compared with the injection molding system 100A of FIG. 1, the injection molding system 100B further includes a molding device 105. The injection unit 104 is communicable with the molding device 105 through at least one injector 154. In some embodiments, the molding device 105 is configured to receive the mixture from the injection unit 104 and form an article from the mixture inside the molding device 105. In some embodiments, the molding device 105 includes at least one feeding port (not shown) for the mixture flowing through, and a mold cavity (not shown) for receiving and holding the mixture. In some embodiments, the mixture is injected into the mold cavity by the injection unit 104 through the feeding port. In some embodiments, after injecting the mixture into the mold cavity, the mixture undergoes physical foaming process inside the mold cavity to become a foamed article.

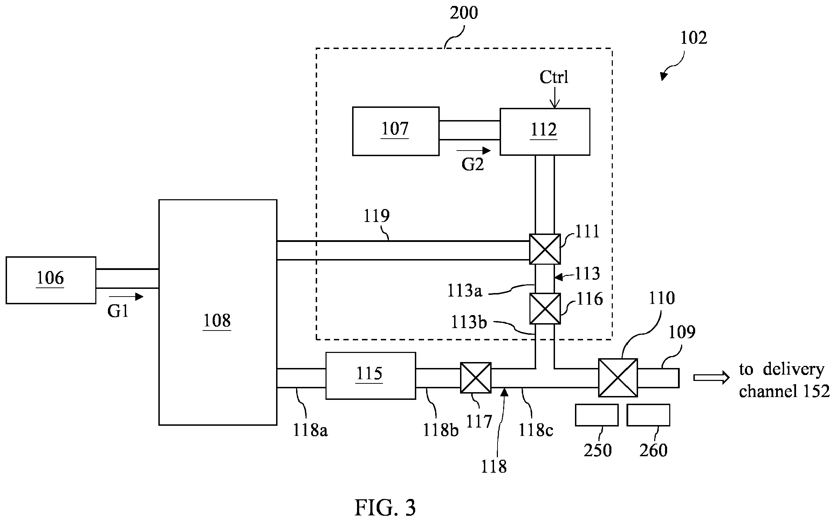

FIG. 3 is the fluid supply unit 102 of the injection molding system in FIGS. 1 and 2, in accordance with some embodiments of the present disclosure. In some embodiments, the fluid supply unit 102 includes a first gas source 106, a compressor 108, an injection valve 110, and an injection outlet 109. In some embodiments, the first gas source 106 is connected to the compressor 108 and is configured to provide a gas G1 to the compressor 108. In some embodiments, the gas G1 may include nitrogen, carbon dioxide, or the like. In some embodiments, the compressor 108 is configured to receive the gas G1 (e.g. nitrogen, carbon dioxide, or the like) from the first gas source 106 and then compress or pressurize the gas G1 to become a specific gas. In some embodiments, the specific gas is a physical blowing agent in a supercritical state for subsequent physical foaming process.

In some embodiments, the physical blowing agent is discharged from the compressor 108 toward the injection valve 110 through a first passage 118. In some embodiments, the physical blowing agent discharged from the compressor 108 flows to the injection outlet 109 via the injection valve 110. The injection outlet 109 is communicable with the mixing unit 103 through the delivery channel 152, as shown in FIGS. 1 and 2. The physical blowing agent is supplied to the mixing unit 103 from the compressor 108 through the injection valve 110, the injection outlet 109 and the delivery channel 152. In some embodiments, the injection valve 110 is configured to control the passage of the physical blowing agent. When the injection valve 110 is turned on, the physical blowing agent is allowed to pass through the injection valve 110 and flow into the mixing unit 103. When the injection valve 110 is turned off, the physical blowing agent is blocked by the injection valve 110 and is unable to flow into the mixing unit 103. In some embodiments, the injection valve 110 is a gate valve, a plug valve, a ball valve, or the like.

In some embodiments, a metering unit 115 is disposed within the first passage 118 and between the compressor 108 and the injection valve 110. The metering unit 115 is configured to measure a flow rate of the physical blowing agent passing through and/or an amount of the physical blowing agent entered the mixing unit 103 within a period of time. In some embodiments, a first check valve 117 is disposed within the first passage 118 and between the metering unit 115 and the injection valve 110. The first check valve 117 is configured to prevent a backflow of the physical blowing agent or any other fluid from the mixing unit 103 toward the compressor 108 or from the injection valve 110 toward the metering unit 115.

In some embodiments, the first passage 118 is divided into the sub-passages 118a, 118b and 118c. The metering unit 115 is connected to the compressor 108 through the sub-passage 118a and to the first check valve 117 through the sub-passage 118b. The first check valve 117 is connected to the injection valve 110 through the sub-passage 118c. In some embodiments, the sub-passage 118a is implemented by a high pressure pipe and has explosion-proof performance. In some embodiments, the sub-passages 118b and 118c are implemented by the seamless steel pipes.

After the physical blowing agent is supplied to the mixing unit 103, the physical blowing agent is mixed within the mixing unit 103 with the flowable polymeric material provided by the melting unit 101, so as to form a mixture including both the physical blowing agent and the flowable polymeric material. After forming the mixture in the mixing unit 103, the mixture is injected into a mold cavity of the molding device 105 by the injection unit 104. The mixture then undergoes a physical foaming process inside the mold cavity and becomes a foamed article.

During the operation of the injection molding system 100, some unwanted materials (e.g. residue, dirt, or the like) accumulate on or around the injection valve 110. Those unwanted material may attach to the injection valve 110 and therefore adversely affect the performance or operation of the injection valve 110. As such, it is necessary to clean the injection valve 110 (e.g. by removing those unwanted material, or the like). In other words, a cleaning procedure is required for the injection valve 110 to avoid reducing the performance of the injection molding systems 100A and 100B. In some embodiments, a monitoring device 250 is disposed adjacent to the injection valve 110 and is configured to monitor the accumulation of the unwanted material. In some embodiments, a sensor 260 is disposed adjacent to the injection valve 110 and is configured to sense the present of the unwanted material.

In FIG. 3, the fluid supply unit 102 further includes a cleaning mechanism 200 for cleaning the injection valve 110. In some embodiments, the cleaning mechanism 200 is adjacent to and coupled to the injection valve 110. In some embodiments, the cleaning mechanism 200 is connected to the injection valve 110 through a third passage 113. In some embodiments, the cleaning mechanism 200 is configured to perform the cleaning procedure to clean the injection valve 110 when the monitoring device 250 or the sensor 260 determines that the cleaning is required. As the cleaning mechanism 200 is implemented in the fluid supply unit 102, the injection valve 110 can be cleaned easily, without uninstalling the injection valve 110 and the passages around the injection valve 110. As a result, fluid leakage from the fluid supply unit 102 or the injection molding system 100 can be prevented.

In some embodiments, the cleaning mechanism 200 includes an actuating device 112 and a control valve 111 connected to the actuating device 112. The actuating device 112 is configured to receive a signal Ctrl and output a force according to the control signal Ctrl, so as to actuate the control valve 111. In some embodiments, the signal Ctrl is inputted manually, for example, pressing a button by an operator, touching a screen of a computer connected to the actuating device 112 by an operator or the like. In some embodiments, the actuating device 112 is operated automatically, that the force is outputted automatically. In some embodiments, the actuating device 112 is under automatic control by a computing program, such as a programmable logic controller (PLC ) or the like. In some embodiments, the signal Ctrl is inputted remotely and/or wirelessly.

In some embodiments, the actuating device 112 is operated automatically at a predetermined interval. For example, the actuating device 112 is operated automatically once every 10 minutes. In some embodiments, the actuating device 112 is a hydraulic cylinder, pneumatic cylinder, a motor or the like. In some embodiments, a second gas source 107 is connected to the actuating device 112. In some embodiments, the second gas source 107 is configured to provide a second gas G2 (e.g. air, or the like) to the actuating device 112. In some embodiments, the second gas G2 is a compressed or pressurized gas for actuation of the actuating device 112. In some embodiments, the second gas G2 is supplied to the actuating device 112 upon receiving the signal Ctrl manually or automatically. In some embodiments, the first gas G1 is different from the second gas G2. For example, the first gas G1 is nitrogen and the second gas G2 is air.

In some embodiments, the force is outputted from the actuating device 112 when the actuating device 112 receives the second gas G2. In some embodiments, the force is provided for actuating the control valve 111, such as turning on or off the control valve 111. In some embodiments, the control valve 111 is rotated by the actuating device 112 at a predetermined angle to be turned on or off. In some embodiments, the control valve 111 is configured to control a fluid flowing through. In some embodiments, the fluid is allowed to flow through when the control valve 111 is turned on, and is blocked to flow through when the control valve 111 is turned off. In some embodiments, the control valve 111 is turned on automatically by the actuating device 112 at the predetermined interval. For example, the control valve 111 is turned on automatically by the actuating device 112 once every 10 minutes. In some embodiments, the control valve 111 is turned on automatically by actuating device 112 for a predetermined duration. For example, the control valve 111 is turned on for 10 seconds, and then turned off. In some embodiments, the control valve 111 is a gate valve, plug valve, ball valve, or the like.

In some embodiments, the physical blowing agent can flow from the compressor 108 toward the injection valve 110 through a second passage 119 and along the third passage 113 via the control valve 111 during the cleaning procedure. In some embodiments, the physical blowing agent allows to flow from the compressor 108 toward the injection valve 110 through the second passage 119 and along the third passage 113 when the control valve 111 is turned on.

When cleaning of the injection valve 110 is required, the cleaning procedure is performed, and then the control valve 111 is turned on to allow the physical blowing agent flowing through the control valve 111 and blowing toward the injection valve 110 in order to clean the injection valve 110 by the physical blowing agent from the turned on control valve 111. Those unwanted material on or around the injection valve 110 can be blown away by the physical blowing agent during the cleaning procedure.

In some embodiments, the injection valve 110 is turned off during the cleaning procedure, and the physical blowing agent is unable to flow from the compressor 108 toward the injection valve 110 along the first passage 118 through the metering unit 115. In some embodiments, the injection valve 110 is turned on during the cleaning procedure, that the physical blowing agent is able to flow from the compressor 108 toward the injection valve 110 along the first passage 118 through the metering unit 115. In some embodiments, the physical blowing agent is allowed to flow through the control valve 111 to clean the injection valve 110 for the predetermined duration. For example, the physical blowing agent flows through the control valve 111 to clean the injection valve 110 for 10 seconds.

In some embodiments, a second check valve 116 is disposed within the third passage 113 and between the control valve 111 and the injection valve 110. The second check valve 116 is configured to prevent a backflow of the physical blowing agent or any other fluid from the injection valve 110 toward the control valve 111 or from the injection valve 110 toward the compressor 108. In some embodiments, when the injection valve 110 is turned on and the physical blowing agent is allowed to flow to the mixing unit 103 through the turned on injection valve 110, the second check valve 116 is configured to prevent the physical blowing agent from flowing toward the control valve 111. In some embodiments, the first check valve 117 is configured to prevent the physical blowing agent from flowing through or toward the metering unit 115 during the cleaning procedure, in which the control valve 111 is turned on and the physical blowing agent is allowed to flow toward and clean the injection valve 110.

In some embodiments, the third passage 113 is divided into the sub-passages 113a and 113b by the second check valve 116. The second check valve 116 is connected to the control valve 111 through the sub-passage 113a and to the first check valve 117 through the sub-passage 113b. The first check valve 117 is connected to the first passage 118 through the sub-passage 118b. In some embodiments, the sub-passages 113a and 113b are implemented by the seamless steel pipes.

After the cleaning procedure for the injection valve 110, the physical blowing agent is blocked to flow from the compressor 108 toward the injection valve 110 through the control valve 111. In some embodiments, the force is outputted from the actuating device 112 to turn off the control valve 111, such that the physical blowing agent from the compressor 108 is blocked to flow through the third passage 113.

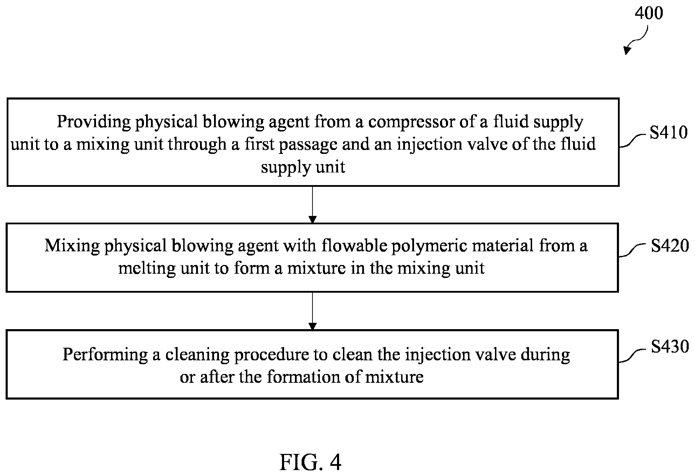

FIG. 4 is a method 400 of operating an injection molding system (e.g., the injection molding system 100A of FIG. 1 and the injection molding system 100B of FIG. 2), in accordance with some embodiments of the present disclosure.

In operation S410, the physical blowing agent from the fluid supply unit 102 is provided (or supplied) to the mixing unit 103. Simultaneously, the flowable polymeric material from the melting unit 101 is also provided to the mixing unit 103. In some embodiments, the physical blowing agent is discharged from the fluid supply unit 102 to the mixing unit 103 through the injection outlet 109. In some embodiments, the physical blowing agent is discharged from the compressor 108 to the mixing unit 103 through the first passage 118, the injection valve 110 and the injection outlet 109. In some embodiments, the metering unit 115 is disposed within the first passage 118, and is configured to measure a flow rate of the physical blowing agent passing through and/or an amount of the physical blowing agent entered the mixing unit 103 within a period of time.

In operation S420, the physical blowing agent from the fluid supply unit 102 and the flowable polymeric material from the melting unit 101 are mixed in the mixing unit 103, so as to form a mixture in the mixing unit 103. In operation S430, a cleaning procedure is performed by the cleaning mechanism 200 to clean the injection valve during or after the formation of mixture. In some embodiments, the cleaning procedure is performed when monitoring the amount of the unwanted material accumulated on or around the injection valve 110 exceeds a threshold value or sensing the unwanted material is present in the injection valve 110.

In some embodiments, the method 400 of operating the injection molding system further includes injecting the mixture from the mixing unit 103 into the molding device 105 by the injection unit 104. In some embodiments, the mixture is injected into the mold cavity of the molding device 105 by the injection unit 104. In some embodiments, the method 400 of operating the injection molding system further includes foaming the mixture inside the molding device 105 to become a foamed article. The mixture undergoes physical foaming process within the mold cavity to form the foamed article. After the physical foaming process, the foamed article is taken out from the mold cavity.

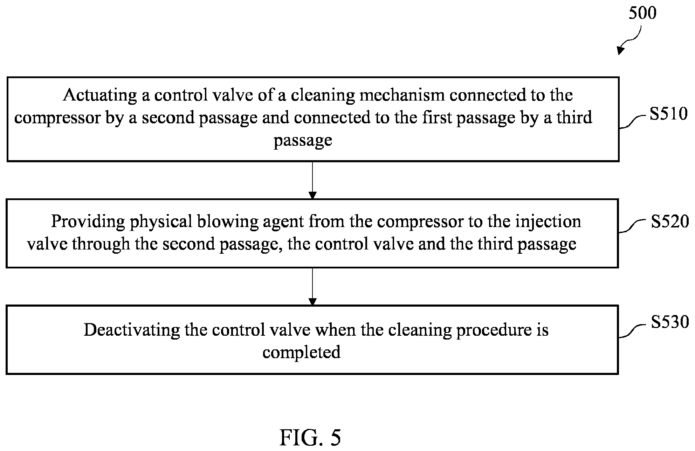

FIG. 5 is a method 500 of performing a cleaning procedure to clean the injection valve 110 of FIG. 3, in accordance with some embodiments of the present disclosure. In some embodiments, the method 500 of performing the cleaning procedure to clean the injection valve 110 is implemented during or after the formation of the mixture. In some embodiments, the method 500 is performed by the cleaning mechanism 200 of FIG. 3 of the injection molding system (e.g., the injection molding system 100A of FIG. 1 or the injection molding system 100B of FIG. 2).

In operation S510, the control valve 111 is actuated (or turned on) by the actuating device 112. In some embodiments, the control valve 111 is connected to the compressor 108 through the second passage 119, and the control valve 111 is connected to the first passage 118 through the third passage 113. In some embodiments, the control valve 111 is actuated by the actuating device 112 when the signal Ctrl is received by the actuating device 112.

In operation S520, the physical blowing agent is provided from the compressor 108 to the injection valve 110 through the second passage 119, the control valve 111, and the third passage 113, so as to clean the injection valve 110 by removing the unwanted material in the injection valve 110. In some embodiments, the actuating device 112 is configured to actuate the control valve 111 to turn on, and then the physical blowing agent is allowed to flow from the compressor 108 toward the injection valve 110 through the control valve 111 to blow and clean the injection valve 110.

In operation S530, the control valve 111 is deactivated when the cleaning procedure is completed. In some embodiments, the control valve 111 is turned off by the actuating device 112 when the cleaning of the injection valve 110 is completed. In some embodiments, the control valve 111 is turned off by the actuating device 112 automatically after the predetermined duration. In some embodiments, the control valve 111 is turned off by the actuating device 112 manually, that the signal Ctrl is inputted to the actuating device 112 to turn off the control valve 111 by an operator.

In some embodiments, the injection valve 110 is turned off during the cleaning procedure, so the physical blowing agent does not flow through the injection valve 110 and the metering unit 115. In some embodiments, the injection valve 110 is turned on during the cleaning procedure, so the physical blowing agent flows through the injection valve 110 and the metering unit 115. In some embodiments, the cleaning procedure is performed after the physical blowing agent is provided to the mixing unit 103.

In some embodiments, the cleaning of the injection valve 110 lasts for a predetermined duration (e.g. several seconds, several minutes or the like) during the cleaning procedure. In some embodiments, the injection valve 110 is turned off during the cleaning procedure, so the physical blowing agent is not allowed to flow from the first passage 118 through the metering unit 115 and the injection valve 110 into the mixing unit 103. In some embodiments, the injection valve 110 is turned on during the cleaning procedure, so the physical blowing agent is allowed to flow from the first passage 118 through the metering unit 115 and the injection valve 110 into the mixing unit 103.

In some embodiments, after the cleaning of the injection valve 110, the supply of the physical blowing agent from the compressor 108 through the first passage 118 and the metering unit 115 toward the injection valve 110 and the injection outlet 109 into the mixing unit 103 is resumed. The physical blowing agent can be discharged from the compressor 108 through the first passage 118 and can flow to the mixing unit 103 through the injection valve 110 and the injection outlet 109.

According to the embodiments, by using the cleaning mechanism 200 in the fluid supply unit 102, the injection valve 110 can be cleaned easily, without uninstalling the injection valve 110 and the passages around the injection valve 110. As a result, fluid leakage from the fluid supply unit 102 or the injection molding system 100 can be prevented.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

Moreover, the scope of the present application is not intended to be limited to the particular embodiments of the process, machine, manufacture, composition of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein, may be utilized according to the present disclosure. Accordingly, the appended claims are intended to include within their scope such processes, machines, manufacture, compositions of matter, means, methods and steps.

## Claims

1. An injection molding system, comprising:
a mixing unit configured to mix a flowable polymeric material with a blowing agent to form a mixture; and
a fluid supply unit configured to provide the blowing agent to the mixing unit, and comprising:
an injection outlet coupled to the mixing unit;
a compressor configured to generate the blowing agent;
an injection valve disposed between the injection outlet and the compressor and configured to receive the blowing agent from the compressor through a first passage; and
a cleaning mechanism configured to clean the injection valve, and comprising:
a control valve coupled to the compressor through a second passage, and coupled to the injection valve through a third passage connected to the first passage; and
an actuating device configured to actuate the control valve,
wherein the blowing agent is flowable to the injection valve through the second passage, the third passage and the control valve.

2. The injection molding system of Claim 1, wherein the fluid supply unit further comprises:
a metering unit disposed between the compressor and the injection valve, and configured to measure a flow rate of the blowing agent passing through the first passage.

3. The injection molding system of Claim 1, wherein the fluid supply unit further comprises:
a first check valve disposed within the first passage and between the compressor and the injection valve, and configured to prevent the blowing agent from flowing toward the compressor from the injection valve.

4. The injection molding system of Claim 1, wherein the cleaning mechanism further comprises:
a second check valve disposed within the third passage and between the control valve and the injection valve, and configured to prevent the blowing agent from flowing toward the control valve from the injection valve.

5. The injection molding system of Claim 1, further comprising:
a first gas source connected to the compressor, and configured to provide a first gas to the compressor for generating the blowing agent,
wherein the first gas comprises nitrogen or carbon dioxide.

6. The injection molding system of Claim 1, wherein the cleaning mechanism further comprises:
a second gas source connected to the actuating device, and configured to provide a second gas to the actuating device for actuating the control valve,
wherein the second gas comprises air.

7. The injection molding system of Claim 1, further comprises:
a melting unit connected to the mixing unit, and configured to heat and melt raw polymeric material to provide the flowable polymeric material to the mixing unit.

8. The injection molding system of Claim 1, further comprises:
an injection unit coupled to the mixing unit, and configured to receive the mixture from the mixing unit; and
a molding device coupled to the injection unit, and configured to receive the mixture from the injection unit to form an article inside the molding device.

9. The injection molding system of Claim 1, wherein the cleaning mechanism further comprises:
a monitoring device disposed adjacent to the injection valve, and configured to monitor accumulation of unwanted material accumulated on or around the injection valve; or
a sensor disposed adjacent to the injection valve, and configured to sense presence of the unwanted material.

10. An injection molding method, comprising:
providing a blowing agent from a compressor of a fluid supply unit to a mixing unit through an injection valve of the fluid supply unit through a first passage of the fluid supply unit;
mixing a flowable polymeric material with the blowing agent to form a mixture in the mixing unit coupled to the fluid supply unit; and
cleaning the injection valve by a cleaning mechanism of the fluid supply unit during or after the formation of the mixture,
wherein the cleaning the injection valve by the cleaning mechanism further comprises:
actuating a control valve of the cleaning mechanism connected to the compressor by a second passage and connected to the first passage by a third passage; and
providing the blowing agent from the compressor to the injection valve through the second passage, the control valve and the third passage.

11. The injection molding method of Claim 10, wherein the cleaning the injection valve by the cleaning mechanism of the fluid supply unit during or after the formation of the mixture further comprises:
deactivating the control valve when the cleaning of the injection valve is completed, so that the blowing agent is unable to flow from the compressor toward the injection valve along the control valve.

12. The injection molding method of Claim 10, further comprising:
injecting the mixture from the mixing unit to a molding device, to form an article inside the molding device.

13. The injection molding method of Claim 10, further comprising:
measuring, by a metering unit of the fluid supply unit, a flow rate of the blowing agent passing through the first passage; and
blocking, by a first check valve disposed between the metering unit and the injection valve, the blowing agent flowing toward the metering unit from the injection valve during the cleaning of the injection valve.

14. The injection molding method of Claim 10, further comprising:
blocking, by a second check valve disposed between the control valve and the injection valve, the blowing agent flowing toward the control valve from the injection valve when the blowing agent is discharged from the compressor to the mixing unit through the first passage.

15. The injection molding method of Claim 10, wherein the cleaning the injection valve by the cleaning mechanism further comprises:
monitoring accumulation of unwanted material accumulated on or around the injection valve, or sensing presence of the unwanted material; and
cleaning the injection valve by the cleaning mechanism when the accumulation of unwanted material is greater than a threshold value or the unwanted material is present.
